# EUROPÄISCHE PATENTSCHRIFT

(11) **EP 0 539 825 B1**
(45) Veröffentlichungstag und Bekanntmachung des Hinweises auf die Patenterteilung: **21.02.1996**
(21) Anmeldenummer: 92117820.8
(22) Anmeldetag: 19.10.1992
(51) Int. Cl.: C09B 67/26, C09B 67/24

(54) **Lagerstabile Präparation von Reaktivfarbstoffen**
Storage-stable preparation of reactive dyes
Préparation des colorants réactifs stable au stockage

(30) Priorität: 30.10.1991 DE 4135741
(43) Veröffentlichungstag der Anmeldung: 05.05.1993
(73) Patentinhaber: BAYER AG, D-51368 Leverkusen (DE)
(72) Erfinder: Michna, Martin, Dr., W-5024 Pulheim (DE)

(56) Entgegenhaltungen:
- EP-A- 0 114 031
- EP-A- 0 184 556
- EP-A- 0 201 458
- EP-A- 0 210 378
- US-A- 4 198 268
- A.F. HOLLEMAN; E. WIBERG 'Lehrbuch der Anorganischen Chemie' 1976 , WALTER DE GRUYTER , BERLIN; NEW YORK
- PATENT ABSTRACTS OF JAPAN vol. 5, no. 8 (C-39)(680) 20. Januar 1981

## Beschreibung

Die vorliegende Erfindung betrifft Präparationen von Reaktivfarbstoffen.

Reaktivfarbstoffe enthalten eine Gruppierung, die in der Lage ist, mit OH-Gruppen der Cellulose oder den NH₂ beziehungsweise SH-Gruppen von natürlichen und synthetischen Polyamiden eine kovalente Bindung einzugehen. Dadurch werden besonders gute Naßechtheiten erzielt.

Diese Gruppierungen können aber ebenso mit Wasser reagieren, so daß die Farbstoffe schon vor dem eigentlichen Färbevorgang z.B. in der Syntheselösung einen Teil ihrer Fähigkeit, mit dem Fasermaterial zu reagieren, verlieren können. Dies hat eine verminderte Farbstoffausbeute und einen höheren Farbstoffanteil in den Abwassern des Produktions- oder des Färbevorgangs zur Folge.

Diese unerwünschte Reaktion kann aber nicht nur in der Syntheselösung, sondern z.B. bei der Aufarbeitung durch Sprühtrocknung, in wasserhaltigen Flüssigformulierungen oder in festem Zustand mit der unvermeidlichen Restfeuchte stattfinden. Insbesondere bei höheren Temperaturen und längeren Lagerzeiten können beträchtliche Verluste auftreten.

Aus EP-A-114 031 und JP-A-55 135 170 ist bereits bekannt, die Stabilität von Reaktivfarbstoffen durch bestimmte Phosphatpuffer zu verbessern. Die so erhaltenen Ergebnisse sind aber unbefriedigend. Aus der DE-A-1 794 173 sind bereits granulierte Farbstoffpräparate bekannt, die neben einem löslichen Farbstoff auch höchstens 50 % eines in Wasser dissozierenden Salzes, wie z.B. Pyrophosphat, enthält. Das dissozierende Salz ist offensichtlich im Präparat enthalten, um die Granulierung zu ermöglichen und dabei die Benetzbarkeit und Löslichkeit in Wasser zu erhöhen.

Die vorliegende Erfindung betrifft Präparationen von Reaktivfarbstoffen, insbesondere für Cellulose und natürliche oder synthetische Polyamide, die wenigstens einen Reaktivfarbstoff und einen Stabilisator enthalten, dadurch gekennzeichnet, daß als Stabilisator Pyrophosphorsäure oder ein Salz davon enthalten ist in einer Menge von 0,1 - 20 Gew.-% bezogen auf die Präparation.

Bevorzugt sind hierbei die Alkalisalze oder die sauren Alkalisalze, besonders bevorzugt sind die Natrium- beziehungsweise die sauren Natriumsalze wie z.B.

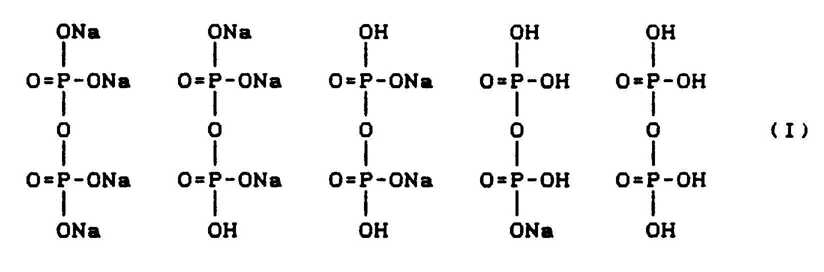

Es kann auch zunächst eine beliebige Neutralisationsstufe der Pyrophosphorsäure eingesetzt werden und anschließend durch Zusatz einer Säure oder Base zu der Mischung ein anderes Salz als das ursprünglich zugesetzte erzeugt werden.

Die Pyrophosphate werden in Mengen von vorzugsweise 0,5 - 10 % eingesetzt, bezogen auf die Masse der Präparation.

Den erfindungsgemäßen Präparationen können auch übliche Puffersubstanzen zugesetzt werden, wie z.B. Orthophosphate, Metaphosphate und Borate.

Die stabilisierende Wirkung der Pyrophosphate geht deutlich über die üblichen Puffer mit reiner pH-Stabilisierung hinaus. Die erfindungsgemäßen Präparationen können fest oder flüssig sein.

Die festen Präparationen können als Pulver oder Granulate vorliegen. Diese können neben Pyrophosphat noch weitere Zusätze, wie sie bei Reaktivfarbstoffen üblich sind, enthalten.

Für die erfindungsgemäßen festen Präparationen geeignete wasserlösliche Einstellmittel sind anorganische Salze wie NaCl, Na₂SO₄, (NH₄)₂SO₄, Polyphosphate, vorzugsweise aber Nichtelektrolyte wie Dextrin, Zucker, Polyvinylpyrrolidon, Polyvinylalkohol, Harnstoff und anionische Dispergiermittel wie sulfatierte primäre oder sekundäre aliphatische Alkohole mit 10 bis 18 Kohlenstoffatomen, sulfatierte Fettsäureamide, sulfatierte Alkylenoxyaddukte, sulfatierte partiell veresterte mehrwertige Alkohole, und vor allem Sulfonate, wie langkettige Alkylsulfonate, beispielsweise Laurylsulfonat, Cetylsulfonat, Stearylsulfonat, Mersolate, Natriumdialkylsulfosuccinate, wie Natriumdioctylsulfosuccinat, wie Tauride, beispielsweise Oleylmethyltaurid (Natriumsalz), Alkylarylsulfonate, wie Alkylbenzolsulfonate mit gradkettiger oder verzweigter Alkylkette mit 7 bis 20 Kohlenstoffatomen, und Mono- und Dialkylnaphthalinsulfonate, wie Nonylbenzolsulfonat, Dodecylbenzolsulfonat und Hexadecylbenzolsulfonat, sowie 1-Isopropyl-naphthalin-2-sulfonat, Di-iso-propylnaphthalinsulfonat, Di-n-butylnaphthalinsulfonat, Diisobutylnaphthalinsulfonat: Kondensationsprodukte aus Naphthalinsulfonsäuren und Formaldehyd, wie Dinaphthylmethandisulfonat; dann Ligninsulfonate und Oxyligninsulfonate.

Zusätzlich können zur Staubbindung Öle wie z.B. Mineralöle oder Phthalsäureester oder handelsübliche Entstaubungsmittel zugesetzt werden.

Als weitere Zusätze können z.B. Konservierungsstoffe und Entschäumer enthalten sein.

Zur Herstellung der erfindungsgemäßen festen Farbstoffpräparationen werden die Komponenten trocken gemischt und gemahlen oder die gemahlenen Komponenten gemischt. Die Mahlung kann z.B. in einem Mischer, einer Kugelmühle, Stiftscheibenmühle, Hammermühle oder in einer Luftstrahlmühle erfolgen.

Eine andere Möglichkeit der Herstellung besteht darin, daß man eine wäßrige Dispersion oder vorzugsweise eine wäßrige Lösung der Komponenten trocknet und anschließend gegebenenfalls zu einem Pulver mahlt. Die Trocknung kann z.B. in einem Umluftschrank, mit Schaufeltrockner, Walzentrockner, bevorzugt jedoch durch Sprühtrocknung mit einer Ein- oder Zweistoffdüse oder Zerstäuberscheibe erfolgen.

Die erfindungsgemäßen flüssigen Farbstoffpräparationen sind vorzugsweise Farbstofflösungen, welche folgende Bestandteile enthalten:
10 - 45 Gew.-% eines wasserlöslichen Farbstoffs
0,1 - 20, vorzugsweise 0,5 - 10 Gew.-% eines Pyrophosphats
0 - 85, vorzugsweise 0 - 30 Gew.-% eines wasserlöslichen organischen Lösungsmittels
0 - 3 Gew.-% eines Puffers sowie Wasser (ad. 100)

Als wasserlösliche organische Lösungsvermittler für Reaktivfarbstoffe kommen nur solche in Frage, die zu keiner Reaktion mit der faserreaktiven Gruppe fähig sind. Beispielsweise seien genannt:

ε-Caprolactam, N-Methylcaprolactam, N-Methylpyrrolidon, γ-Butyrolacton, Dimethylformamid, Ethylencarbonat, Polyvinylpyrrolidon, Harnstoff, Thioharnstoff, Dicyandiamid, Dimethylsulfon, Sulfolan und Dimethylsulfoxid.

Die Herstellung der erfindungsgemäßen flüssigen Farbstoffpräparationen erfolgt so, daß der Farbstoff in trockener oder feuchter Form, beispielsweise als feuchter Preßkuchen in Wasser oder einem Gemisch aus Wasser und wassermischbaren organischen Lösungsvermittlern angerührt, gegebenenfalls bei leicht erhöhter Temperatur unter Zusatz von Pyrophosphat und eventuellen sonstigen Zusätzen gelöst und falls notwendig von ungelösten Bestandteilen durch Filtration befreit wird. Anstelle des Preßkuchens beziehungsweise trockenen Farbstoffpulvers kann auch bevorzugt ein salzarmes Konzentrat, das durch Druckpermeation hergestellt wurde, beziehungsweise Mischungen dieser Formen eingesetzt werden.

Eine weitere Herstellungsmöglichkeit für die erfindungsgemäßen konzentrierten Farbstofflösungen besteht darin, die Pyrophosphate der am Ende der Farbstoffsynthese vorliegenden Lösung oder Suspension zuzusetzen, gegebenenfalls unter Zugabe von wasserlöslichen organischen Lösevermittlern. Die Lösung oder Suspension, welche nach der Synthese erhalten wird, kann auch vor dem Zusatz von Pyrophosphat einer Druckpermeation unterzogen werden.

Falls eine Druckpermeation durchgeführt wird, so erfolgt sie an semipermeablen Membranen entweder als Reversosmose, Ultra- oder Nanofiltration oder durch Kombination aus zwei oder mehreren dieser Methoden.

Bei der Reversosmose werden Membranen eingesetzt, die nur für Wassermoleküle durchlässig sind, Salze jedoch zurückhalten.

Die Ultrafiltration wird mit Membranen betrieben, die für Moleküle mit einem Molekulargewicht unter ca. 20000, vorzugsweise jedoch unterhalb 1000 Dalton sowie für anorganische Salze durchlässig sind.

Für die Nanofiltration verwendbare Membranen sind für Moleküle mit einem Molekulargewicht unter 1000 Dalton, vorzugsweise unter ca. 150 Dalton sowie für einwertige Ionen durchlässig; höherwertige Ionen werden von diesen Membranen weitgehend zurückgehalten.

Dazu können prinzipiell symmetrische, asymmetrische, und Compositemembranen mit semipermeablen Eigenschaften Verwendung finden. Sie können sowohl aus organischen, als auch aus anorganischen Materialien bestehen.

Organische Materialien sind bevorzugt: Polyvinylidenfluorid, Celluloseacetat, Polytetrafluorethan, Polyacrylnitril, Polyethylenamin, Copolymerisate aus Polyacrylnitril und Vinylpyrrolidon, Polysulfon, Polyamid, Polyhydantoin oder auch hydrophilierte Polyolefine, z. B. auf Basis von Polypropylen. Ebenfalls geeignet sind physikochemisch oder chemisch modifizierte Membranen wie z.B. modifizierte Polyacrylnitrilmembranen (vgl. z.B. EP-A-25 973), die beispielsweise erhalten werden durch Umsetzung des Basispolymers mit Hydroxylamin, einer polyfunktionellen, niedermolekularen Verbindung, einem reaktive Gruppen enthaltenden Polymer und einer ionischen Verbindung, die mit dem Polymer eine chemische Bindung eingehen kann, und anschließend mit Aktivchlor, z.B. in Form einer Hypochloritlösung behandelt wird.

Anorganische Membranen sind solche aus porösem Metall beziehungsweise Metallegierungen - (sogenannte Metallsintermembranen z.B. aus porösem Stahl) oder solche aus porösem Kohlenstoff, deren Oberfläche z.B. mit einer dünnen Schicht aus Zirkondioxid, Silicium-oder Aluminiumoxid belegt sein kann, oder weiterhin solche aus porösem Glas oder Keramik.

Vorzugsweise werden zur Durchführung des erfindungsgemäßen Verfahrens die Lösungen einer Druckpermation an asymmetrischen Membranen oder Compositemembranen, die gegebenenfalls mit ionischen Gruppen modifiziert sind, unterworfen, wobei, abhängig von der jeweiligen Porengröße der verwendeten Membran, salzhaltiges oder salzfreies Permeat ausgeschleust wird.

Zur Druckpermeation nach dem erfindungsgemäßen Verfahren können alle handelsüblichen Druckpermeationsanlagen verwendet werden. Wenn der Farbstoff schon teilweise ausgefallen ist oder während der Aufkonzentration ausfällt, muß die Anlage lediglich zur Druckpermeation von Suspensionen geeignet sein. Solche Geräte können z.B. als Platten-, Rahmen-, Rohr-, Schlauch-, Wickel-, Hohlfaser oder Hohlfeinfasermodul ausgebildet sein, in die die oben beschriebenen Membranen eingebaut werden können.

Die erfindungsgemäßen Reaktivfarbstoffe enthalten als wasserlöslichmachende Gruppe ein oder mehrere COOH oder COO^{^{⊖}}-Gruppen, bevorzugt aber eine oder mehrere SO₃H oder SO₃ ^{^{⊖}}-Gruppen, wobei als Gegenionen Na^{⊕}, Li^{⊕}, K^{⊕} oder HNR₃ ^{⊕} mit R = gegebenenfalls substituiertes C₁-C₄-Alkyl in Frage kommt.

Dabei handelt es sich um 1:1 oder 1:2 Metallkomplexfarbstoffe wie 1:1-Nickelkomplexe, 1:1-Kobaltkomplexe, 1:1-Kupferkomplexe, 1:1-Chromkomplexe oder symmetrische oder asymmetrische 1:2-Kobaltkomplexe oder 1:2-Chromkomplexe von Mono-, Dis- oder Polyazo-oder Azomethin-Farbstoffen, die als metallkomplexbildende Gruppen o,o'-Dioxy-, o-Oxy-o'-amino-azo- oder -azo-methin-Gruppen aufweisen, auch solche ohne SO₃H-Gruppen.

Die anionischen Farbstoffe können z.B. der Phthalocyanin-, Nitro-, Di- oder Triphenylmethan-, Oxazin-, Thiazin-, Dioxazin-, Xanthen-, vor allem aber der Anthrachinon- und Azo-Reihe, wie der Monoazo-, Disazo- oder Polyazoreihe angehören. Sie sind beispielsweise in "Colour Index", 3. Ed., Vol, 1, S. 1001 bis 1562, beschrieben.

Geeignete Reaktivgruppen sind z.B. solche, die mindestens einen abspaltbaren Substituenten an einen heterocyclischen Rest gebunden enthalten, unter anderem solche, die mindestens einen reaktiven Substituenten an einen 5- oder 6-gliedrigen heterocyclischen Ring gebunden enthalten, wie an einem Monazin-, Diazin-, Triazin-, z.B. Pyridin-, Pyrimidin-, Pyridazin-, Thiazin-, Oxazin- oder asymmetrischen oder symmetrischen Triazinring oder an ein derartiges Ringsystem, welches einen oder mehrere ankondensierte Ringe aufweist, wie ein Chinolin-, Phthalazin-, Cinnolin-, Chinazolin-, Chinoxalin-, Acridin-, Phenazin- und Phenanthridin-Ringsystem; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen: Halogen (Cl, Br oder F), Azido (N₃), Rhodanido, Thio, Thiolether und Oxyether.

Bevorzugt sind im Fall der vorliegenden Erfindung Reaktivfarbstoffe mit Reaktivgruppen auf Basis folgender Systeme: Mono- oder Dihalogen-symmetrische Triazinylreste, Mono-, Di- oder Trihalogenpyrimidinylreste oder halogen-substituierte Chinoxalinylcarbonylreste.

Insbesondere bevorzugt sind folgende Reaktivgruppen der Formeln (1), (2) und (3) 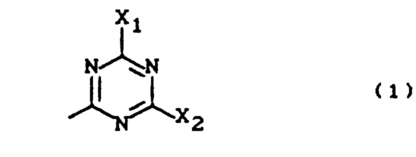 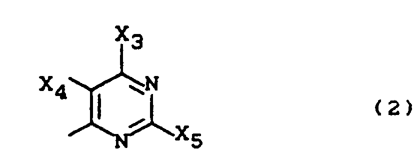 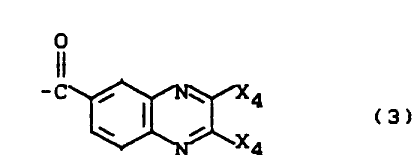 wobei in den Formeln (1), (2) und (3) gilt:
X₁ = F
X₂ = Cl, F, NH₂, N(R)₂, OR, CH₂R, SR, N(CH₂)ₙ, 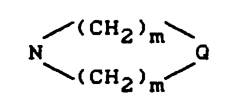
n = 4, 5, 6
m = 2, 3
Q = NH, NR, O, S
X₃ = Cl, F, CH₃
X₄ = Cl, F
X₅ = Cl, F, H
und wobei
R H oder Alkyl (insbesondere gegebenenfalls durch OH, SO₃H oder COOH substituiertes C₁-C₄-Alkyl), Aryl (insbesondere gegebenenfalls durch SO₃H, C₁-C₄-Alkyl, C₁-C₄-Alkoxy substituiertes Phenyl, Aralkyl (insbesondere gegebenenfalls durch SO₃H, C₁-C₄-Alkyl, C₁-C₄-Alkoxy substituiertes Benzyl).

Weitere geeignete faserreaktive Gruppen sind beispielsweise solche mit der Formel (4)

-SO₂-CH₂-CH₂-Z (4)

wobei
Z für Cl, Br, OSO₃H, SSO₃H, NR₂ steht,
und
R für gegebenenfalls substituiertes C₁-C₄-Alkyl steht.

Die Reaktivfarbstoffe können im Molekül eine oder mehrere gleiche oder verschiedene Reaktivgruppen tragen.

Die Farbstoffpräparationen, sowohl die festen als auch die flüssigen, eignen sich zum Färben und Bedrucken von textilen Substraten und sonstigen flächenförmigen Gebilden. Sie zeichnen sich aus durch besondere Haltbarkeit unter verschiedenen Lagerbedingungen und durch besondere Stabilität im Färbebad.

### Beispiel 1

96,36 kg einer Paste des Farbstoffs 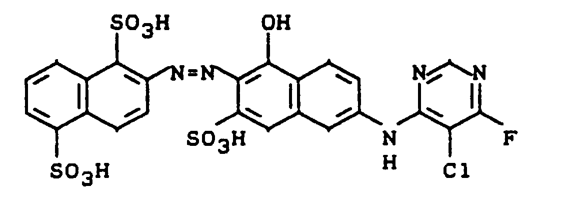 Xₘₐₓ = 490 nm
(Trockengehalt 55 %) werden mit 220 kg Wasser, 6 kg Natriumpyrophosphat, 39 kg eines Kondensationsproduktes aus Naphthalinsulfonsäure und Formaldehyd und 2 kg Mineralöl verrührt und in einem Sprühtrockner zu einem Farbstoffpulver getrocknet. Man erhält 94 kg eines orangefarbenen Pulvers, welches hervorragend lagerstabil ist und besonders farbstarke Drucke und Färbungen liefert.

### Beispiel 2

34 kg eines trockenen Pulvers des Farbstoffes der Formel 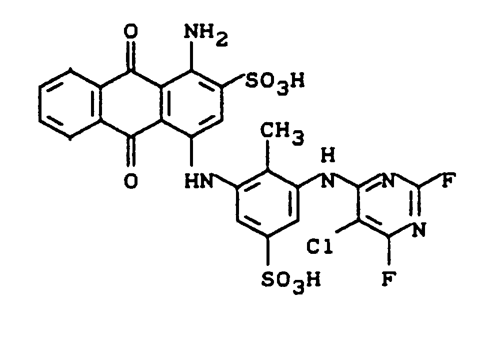 λₘₐₓ = 590 nm
mit einem Reinfarbstoffgehalt von 65 % werden mit 37 kg eines Ligninsulfonats, 3,1 kg Natriumpyrophosphat und 2 kg Phthalsäuredimethylester in einer Mühle innig vermischt. Man erhält ein dunkles Farbstoffpulver, das sich hervorragend eignet zum Färben und Bedrucken von textilen Substraten und dabei besonders lagerstabil ist.

### Beispiel 3

540 kg einer Syntheselösung des Farbstoffs der Formel 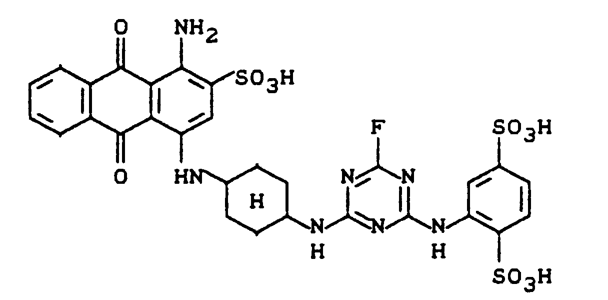 λₘₐₓ = 635 nm
mit einem Farbstoffgehalt von 11 % wird mittels Druckpermeation an einer semipermeablen Membran mit einer Trenngrenze von 3000 Dalton bis auf einen Feststoffgehalt von 26 % aufkonzentriert und anschließend mit 40 kg eines Kondensationsproduktes aus Naphthalinsulfonsäure und Formaldehyd, 3 kg Natriumpyrophosphat und 1 kg Mineralöl versetzt. Die Mischung wird auf einen pH-Wert von 7,9 gestellt und durch Sprühtrocknung in ein Pulver überführt.

### Beispiel 4

160 kg einer feuchten Paste des Farbstoffs der Formel 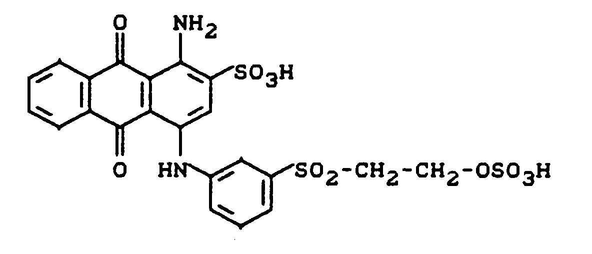 λₘₐₓ = 590 nm
mit einem Trockengehalt von 41 % werden in 100 kg Wasser verrührt und versetzt mit 51,2 kg eines Kondensationsproduktes aus Naphthalinsulfonsäure und Formaldehyd, 6 kg Natriumpyrophosphat und 2 kg Phthalsäurebutylester. Die Suspension wird auf pH 5,8 gestellt und in einem handelsüblichen Sprühtrocknungsgerät getrocknet. Man erhält ca. 115 kg eines dunklen Farbstoffpulvers, das textile Substrate in echten Blautönen anfärbt.

### Beispiel 5

220 kg der Syntheselösung des Farbstoffs 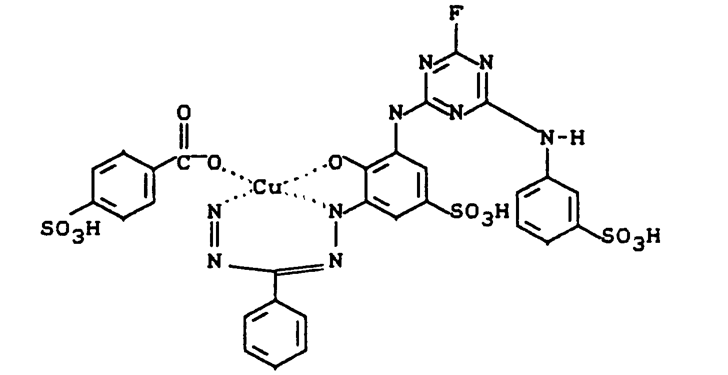 λₘₐₓ = 610 nm
mit einem Trockengehalt von 9,5 % an einer semipermeablen Membran zunächst entsalzt und auf 45 kg aufkonzentriert.

Man stellt den pH-Wert auf 7,7, setzt 9,7 kg eines Kondensationsproduktes aus Naphthalinsulfonsäure und Formaldehyd sowie 3,3 kg Natriumpyrophosphat zu und trocknet in einem handelsüblichen Sprühtrocknungsgerät zu einem Pulver mit einer Restfeuchte von 4,5 %.

### Beispiel 6

200 kg einer Paste des Farbstoffs der Formel 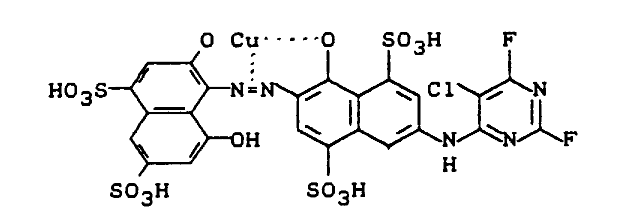 λₘₐₓ = 592 nm
(Trockengehalt 41 %) werden unter Zugabe von 2 kg eines Mineralöls, 27 kg eines Kondensationsproduktes aus Naphthalinsulfonsäure und Formaldehyd, 4 kg Natriumpyrophosphat im Schaufeltrockner getrocknet. Man erhält 115 kg eines dunklen Pulvers, das Cellulose in echten blauen Tönen färbt und das eine sehr gute Lagerstabilität hat.

## Patentansprüche

1. Reaktivfarbstoffpräparation enthaltend wenigstens einen Reaktivfarbstoff und wenigstens einen Stabilisator, dadurch gekennzeichnet, daß als Stabilisator Pyrophosphorsäure oder ein Salz davon enthalten ist in einer Menge von 0,1 - 20 Gew.-% bezogen auf die Präparation.

2. Präparation gemäß Anspruch 1, dadurch gekennzeichnet, daß der Stabilisator in einer Menge von 0,5 - 10 % bezogen auf die Präparation enthalten ist.

3. Präparation nach wenigstens einem der vorhergehenden Ansprüche, dadurch gekennzeichnet, daß der Reaktivfarbstoff ein Azo- oder Anthrachinon-Reaktivfarbstoff ist.

4. Präparation nach wenigstens einem der Ansprüche 1 und 2, dadurch gekennzeichnet, daß der Farbstoff ein o,o'-Dihydroxyazo-Metallkomplex, Formazan- oder Phthalocyaninfarbstoff ist.

5. Präparation nach wenigstens einem der vorhergehenden Ansprüche, dadurch gekennzeichnet, daß der Farbstoff als faserreaktive Gruppe wenigstens eine der folgenden Gruppen 1-4 aufweist 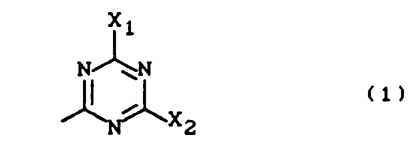 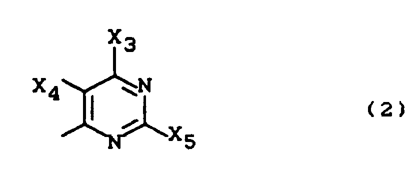 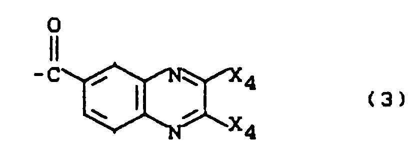 wobei in den Formeln (1), (2) und (3) gilt:
X₁ = F
X₂ = Cl, F, NH₂, N(R)₂, OR, CH₂R, SR, N(CH₂)ₙ, 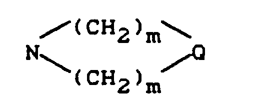
n = 4, 5, 6
m = 2, 3
Q = NH, NR, O, S
X₃ = Cl, F, CH₃
X₄ = Cl, F
X₅ = Cl, F, H
und wobei
R H, Alkyl, substituiertes Alkyl, Aryl, substituiertes Aryl, Aralkyl substituiertes Aralkyl
oder
-SO₂-CH₂-CH₂-Z (4)
wobei
Z für Cl, Br, OSO₃H, SSO₃H, NR₂ steht,
und
R für gegebenenfalls substituiertes C₁-C₄-Alkyl steht.
wobei die Reaktivfarbstoffe im Molekül eine oder mehrere gleiche oder verschiedene Reaktivgruppen tragen können.

6. Präparation gemäß wenigstens einem der vorhergehenden Ansprüche, dadurch gekennzeichnet, daß sie als lagerstabile wäßrige Präparation vorliegt.

7. Präparation gemäß wenigstens einem der vorhergehenden Ansprüche, dadurch gekennzeichnet, daß sie zusätzlich zum Stabilisator als Puffersubstanz Ortho-Phosphate, Metaphosphate oder Borate aufweist.

8. Präparation gemäß wenigstens einem der Ansprüche 6 und 7, dadurch gekennzeichnet, daß sie enthält:
10 - 45 Gew.-% eines wasserlöslichen Farbstoffs
0,1 - 20, vorzugsweise 0,5 - 10 Gew.-% eines Pyrophosphats
0 - 85, vorzugsweise 0 - 30 Gew.-% eines wasserlöslichen organischen Lösungsvermittlers
0 - 3 Gew.-% eines Puffers
sowie Wasser (ad. 100)

9. Verfahren zur Herstellung einer Präparation gemäß wenigstens einem der vorhergehenden Ansprüche, dadurch gekennzeichnet, daß sie vor dem Zusatz des Pyrophosphates einer Druckpermeation unterzogen wird.

10. Verfahren zum Farben von Cellulose oder Polyamiden mit einer Farbstoffpräparation, dadurch gekennzeichnet, daß eine Farbstoffpräparation gemäß wenigstens einem der vorhergehenden Ansprüche verwendet wird.

## Claims

1. Reactive dyestuff preparation containing at least one reactive dyestuff and at least one stabiliser, characterised in that the stabiliser present is pyrophosphoric acid or a salt thereof in an amount of 0.1 - 20 % by weight, relative to the preparation.

2. Preparation according to Claim 1, characterised in that the stabiliser is present in an amount of 0.5 - 10 %, relative to the preparation.

3. Preparation according to at least one of the preceding claims, characterised in that the reactive dyestuff is an azo or anthraquinone reactive dyestuff.

4. Preparation according to at least one of Claims 1 and 2, characterised in that the dyestuff is an o,o'-dihydroxyazo metal complex, formazan or phthalocyanine dyestuff.

5. Preparation according to at least one of the preceding claims, characterised in that the dyestuff contains at least one of the following groups 1-4 as fibre-reactive group 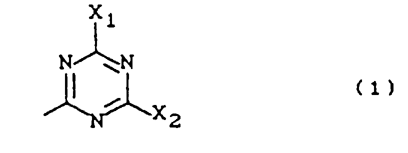 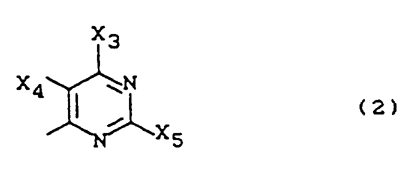 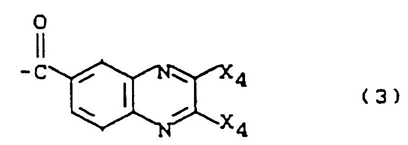 in which in the formulae (1), (2) and (3) the following applies:
X₁ = F
X₂ = Cl, F, NH₂, N(R)₂, OR, CH₂R, SR, N(CH₂)ₙ, 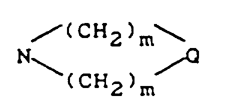
n = 4, 5, 6
m = 2, 3
Q = NH, NR, O, S
X₃ = Cl, F, CH₃
X₄ = Cl, F
X₅ = Cl, F, H
and in which
R is H, alkyl, substituted alkyl, aryl, substituted aryl, aralkyl, substituted aralkyl
or
-SO₂-CH₂-CH₂-Z (4)
in which
Z represents Cl, Br, OSO₃H, SSO₃H, NR₃,
and
R represents substituted or unsubstituted C₁-C₄-alkyl,
the reactive dyestuffs being able to carry one or more identical or different reactive groups in the molecule.

6. Preparation according to at least one of the preceding claims, characterised in that it is present as a stable aqueous preparation.

7. Preparation according to at least one of the preceding claims, characterised in that, in addition to the stabiliser, it contains orthophosphates, metaphosphates or borates as buffer substance.

8. Preparation according to at least one of Claims 6 and 7, characterised in that it contains:
10 - 45 % by weight of a water-soluble dyestuff
0.1 - 20, preferably 0.5 - 10, % by weight of a pyrophosphate,
0 - 85, preferably 0 - 30, % by weight of a water-soluble organic solubiliser
0 - 3 % by weight of a buffer
and water (to 100).

9. Process for producing a preparation according to at least one of the preceding claims, characterised in that it is subjected to pressure permeation before the addition of the pyrophosphate.

10. Process for the dyeing of cellulose or polyamides with a dyestuff preparation, characterised in that a dyestuff preparation according to at least one of the preceding claims is used.

## Revendications

1. Préparation de colorant(s) réactif(s) contenant au moins un colorant réactif et au moins un stabilisant, préparation caractérisée en ce qu'elle contient, comme stabilisant, de l'acide pyrophosphorique ou un sel de cet acide, présent en une quantité de 0,1 à 20 % en poids, par rapport à la préparation.

2. Préparation selon la revendication 1, caractérisée en ce que le stabilisant est contenu en une quantité de 0,5 à 10 %, par rapport à la préparation.

3. Préparation selon l'une au moins des revendications précédentes, caractérisée en ce que le colorant réactif est un colorant réactif azoïque ou anthraquinonique.

4. Préparation selon l'une au moins des revendications 1 et 2, caractérisée en ce que le colorant est un complexe o,o'-dihydroxyazo-métal d'un colorant de la série du formazane ou de la phtalocyanine.

5. Préparation selon l'une au moins des revendications précédentes, caractérisée en ce que le colorant présente, comme groupe pouvant réagir avec les fibres, au moins l'un des groupes 1 à 4 suivants : 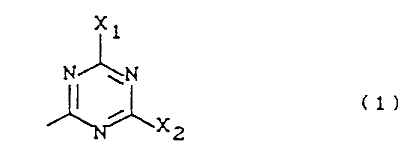 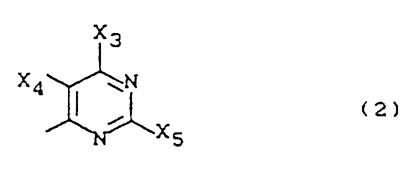 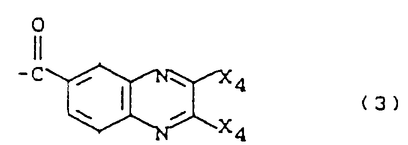 et, dans les formules (1), (2) et (3) :
X₁ = F
X₂ = Cl, F, NH₂, N(R)₂, OR, CH₂R, SR, N(CH₂)ₙ, 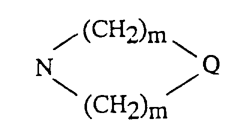
n = 4, 5, 6
m = 2, 3
Q = NH, NR, O, S
X₃ = Cl, F, CH₃
X₄ = Cl, F
X₅ = Cl, F, H
et
R représente H, un groupe alkyle, alkyle substitué, aryle, aryle substitué, aralkyle, aralkyle substitué ;
ou bien
-SO₂-CH₂-CH₂-Z (4)
Z représente Cl, Br, OSO₃H, SSO₃H, NR₂, et
R représente un groupe alkyle en C₁ à C₄ éventuellement substitué,
les colorants réactifs pouvant porter dans leur molécule un ou plusieurs groupes réactifs, identiques ou différents.

6. Préparation selon l'une au moins des revendications précédentes, caractérisée en ce qu'elle est présente sous forme d'une préparation aqueuse stable au magasinage.

7. Préparation selon l'une au moins des revendications précédentes, caractérisée en ce qu'elle présente en outre, comme substance tampon du stabilisant, des orthophosphates, des méthaphosphates ou des borates.

8. Préparation selon l'une au moins des revendications 6 et 7, caractérisée en ce qu'elle contient :
10 à 45 % en poids d'un colorant hydrosoluble,
0,1 à 20, avantageusement 0,5 à 10 % en poids de pyrophosphate,
0 à 85, avantageusement 0 à 30 % en poids d'un adjuvant de dissolution ou tiers solvant organique hydrosoluble,
0 à 3 % en poids d'un tampon,
ainsi que de l'eau (pour compléter à 100 %).

9. Procédé pour produire une préparation selon l'une au moins des revendications précédentes, caractérisé en ce que, avant l'addition du pyrophosphate, la préparation est soumise à une perméation sous pression.

10. Procédé pour teindre de la cellulose ou des polyamides à l'aide d'une préparation de colorant(s), caractérisé en ce qu'on utilise une préparation de colorant(s) selon l'une au moins des revendications précédentes.
